# EUROPEAN PATENT APPLICATION

(11) **EP 1 747 845 A1**
(43) Date of publication of application: **31.01.2007**
(21) Application number: 06116613.8
(22) Date of filing: 05.07.2006
(51) Int. Cl.: B23Q 7/04

(54) **Machining centre with chuck structure displacable in a horizontal and a vertical direction**

(30) Priority: 25.07.2005 IT TO20050512
(71) Applicant: COMAU S.p.A., 10095 Grugliasco (Torino) (IT)
(72) Inventor: Giorda, Claudio, 10095 Grugliasco (Torino) (IT)
(74) Representative: Notaro, Giancarlo

(57) **Abstract**

Described herein is a machining centre comprising a chuck structure (30) pre-arranged for holding the workpiece to be machined from above and supported by a fixed structure (2) in such a way as to be able to translate in a vertical direction Y, for picking up a workpiece to be machined (P) from a workpiece-transfer station (19) or for depositing a machined workpiece on said station. The chuck structure (30) is moreover supported by the fixed structure (2) in such a way as to be also able to translate in a horizontal direction Z so as to be displaceable between a working position, in which the workpiece can be engaged by the tool, and a workpiece-transfer position, set at a distance from the working position, in which the chuck structure is able to unload the machined workpiece onto the aforesaid transfer station or to pick up a workpiece to be machined from said station.

## Description

The present invention relates to machining centres of the type comprising:
- a fixed supporting structure;
- a chuck structure carried by the fixed structure;
- a chuck-holder structure carried by the fixed structure; and
- a chuck assembly mounted so that it can turn within the chuck-holder structure and provided with means for fitting a tool to the chuck.

The purpose of the present invention to provide a machining centre of the type indicated above that will not require a device for loading and unloading the workpieces and that will present a structure that is efficient and reliable and at the same time relatively simple and inexpensive.

With a view to achieving said purpose, the subject of the invention is a machining centre having the characteristics indicated at the start of the present description and further characterized in that the chuck structure is pre-arranged for holding the workpiece from above and is carried by the fixed structure in such a way as to be able to translate both in a vertical direction Y, for picking up a workpiece to be machined from a transfer station or for depositing a machined workpiece on the transfer station, and in a second, horizontal, direction, Z, between a working position, in which the workpiece can be engaged by the tool, and a workpiece-transfer position, set at a distance from said working position, in which the chuck structure is able to unload a workpiece onto said transfer station or to pick it up therefrom.

Thanks to the characteristics indicated above, the machining centre according to the invention does not require any device for loading and unloading the workpieces, since it is the chuck structure itself that is able to move into a transfer position where it can load or unload a workpiece. In addition, the fact that the chuck structure holds the workpiece from above facilitates machining of the workpiece by the tool on different sides of the workpiece when the workpiece is in the working position. In the case, for example, of machining of a cylinder head of an internal-combustion engine, the latter will be suspended from the chuck structure in a position set upside down, with its bottom surface facing upwards, in such a way that the five exposed sides of the head can all be machined.

Once again in the case of the aforesaid preferred embodiment, the chuck structure is carried by a first slide mounted so that it can slide in the aforesaid vertical direction Y on a second slide that is mounted so that it can slide, in turn, on the fixed structure in the aforesaid second horizontal direction Z.

In the case of said preferred embodiment, moreover, the chuck-holder structure is carried by a slide mounted so that it can slide on the fixed structure in a horizontal direction X orthogonal to the two aforesaid directions Y, Z. The chuck-holder structure is moreover mounted so that it can turn on said chuck-holder slide about an axis parallel to said third direction X and is set with the chuck axis set in a direction orthogonal to said axis X. Thanks to said possibility of rotation, the chuck axis can hence be oriented as required in a vertical plane orthogonal to the axis X and parallel to the plane identified by the two directions of movement Y, Z of the chuck structure.

In a particularly preferred embodiment, the slide of the chuck-holder structure is mounted so that it can slide on guides provided on an inclined surface of a shoulder that rises from a base forming part of the fixed structure of the machine, whilst the aforesaid second slide of the chuck structure is mounted so that it can slide on an overhead part of the fixed structure of the machine, the first slide of the chuck structure being mounted so that it can slide in the direction Y through the body of said second slide. The overhead structure on which the aforesaid second slide is slidably mounted is constituted by overhead horizontal beams that connect at the top vertical columns forming part of the fixed structure of the machine.

The station for loading and unloading the workpieces is set underneath said overhead part of the fixed structure of the machine and at the intersection with a line of feed of the workpieces.

Further characteristics and advantages of the invention will emerge from the ensuing description with reference to the annexed plate of drawings, which is provided purely by way of non-limiting example, and in which:
- Figure 1 is a schematic perspective view of a preferred embodiment of the machining centre according to the invention;
- Figure 2 is a further perspective view of the machining centre of Figure 1;

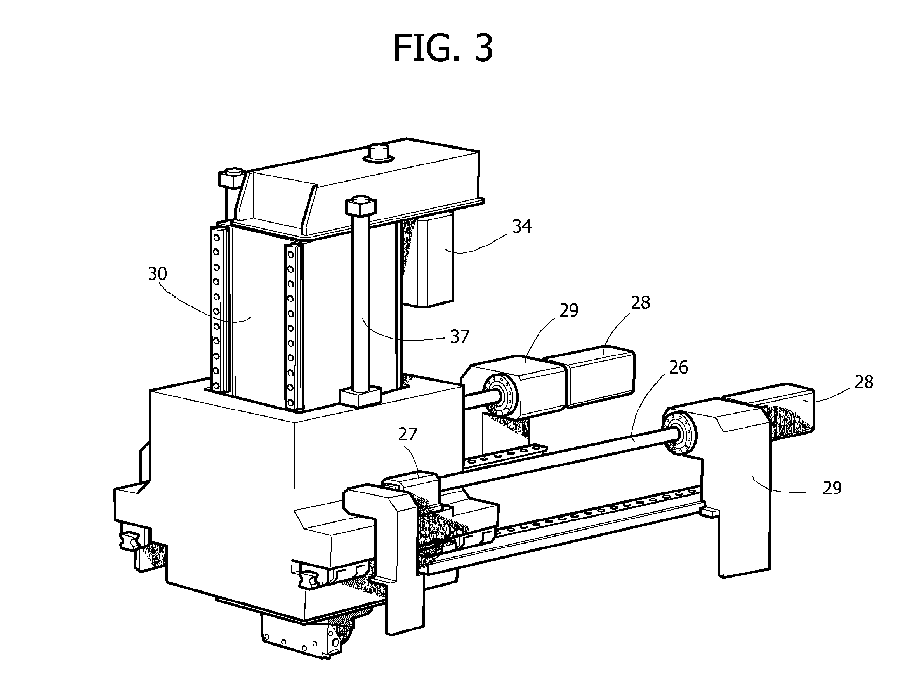

- Figure 3 is a simplified perspective view that shows only a detail of Figure 1 at an enlarged scale;
- Figure 4 is a perspective view at an enlarged scale of another detail;
- Figures 5 and 6 are perspective views at an enlarged scale of a further detail of the machining centre according to the invention; and
- Figure 7 is a perspective view that shows only the fixed framework of the machining centre according to the invention.

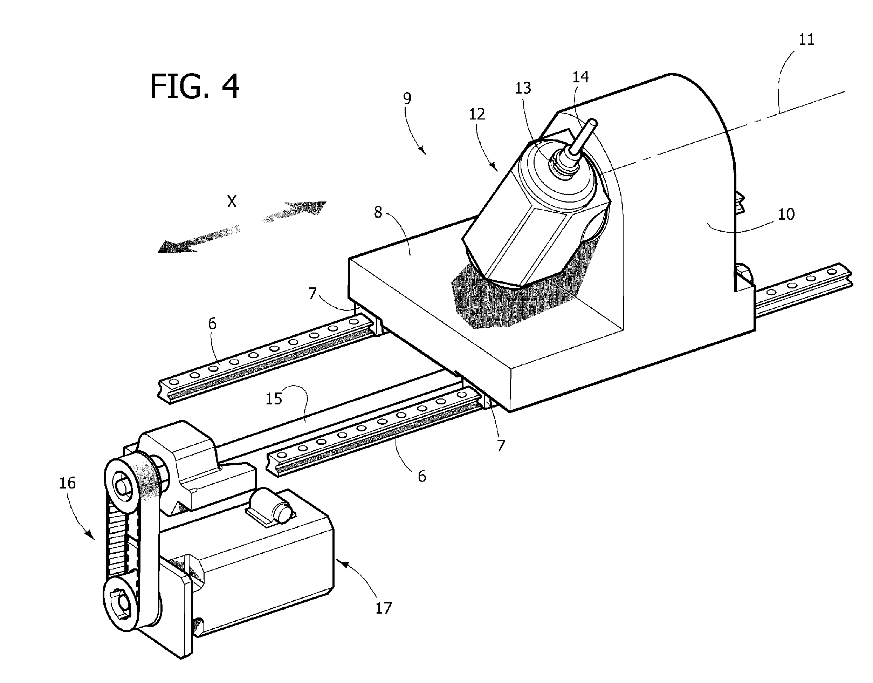

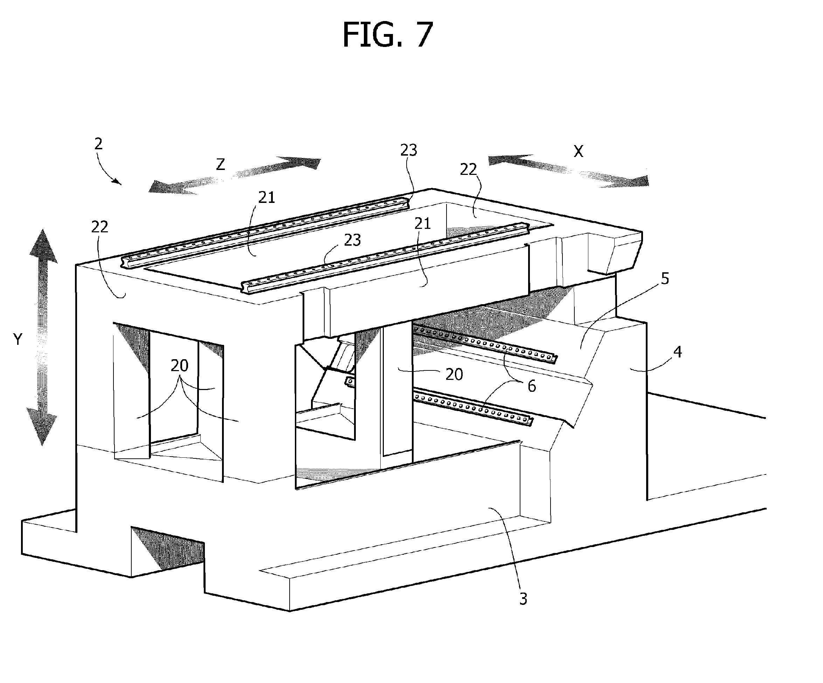

With reference to the drawings, number 1 designates as a whole a machining centre comprising a fixed supporting structure 2. The fixed structure 2 includes a base 3, rising at one end of which is a shoulder 4 defining an inclined front surface 5, forming an angle (for example, of between 45° and 70°) with the horizontal plane. As may be clearly seen in Figure 7, fixed to the inclined plane surface 5 are two horizontal guides 6 set at a distance from one another and parallel to a horizontal direction X. Mounted on the guide 6 are slidable runners 7 (Figure 4) carried by a slide 8 forming part of a chuck-holder structure 9. The slide 8 is in the form of a table with a part projecting in cantilever fashion 10 having a cylindrical cavity mounted within which, so that it can turn about an axis 11 parallel to the direction X, is a chuck-holder member 12. The chuck-holder member 12 (Figure 4) has a cylindrical cavity, mounted within which so that it can turn is a chuck assembly 13, provided with means for fitting a tool 14. As may be clearly seen in the drawings, the chuck-holder member 12 is set so as to maintain the axis of the chuck 13 orthogonal to the axis 11 or - what amounts to the same thing - to the axis X. Consequently, thanks to the arrangement described above, the chuck assembly can be displaced by translation in the direction X and can be oriented as required in a plane orthogonal to said direction.

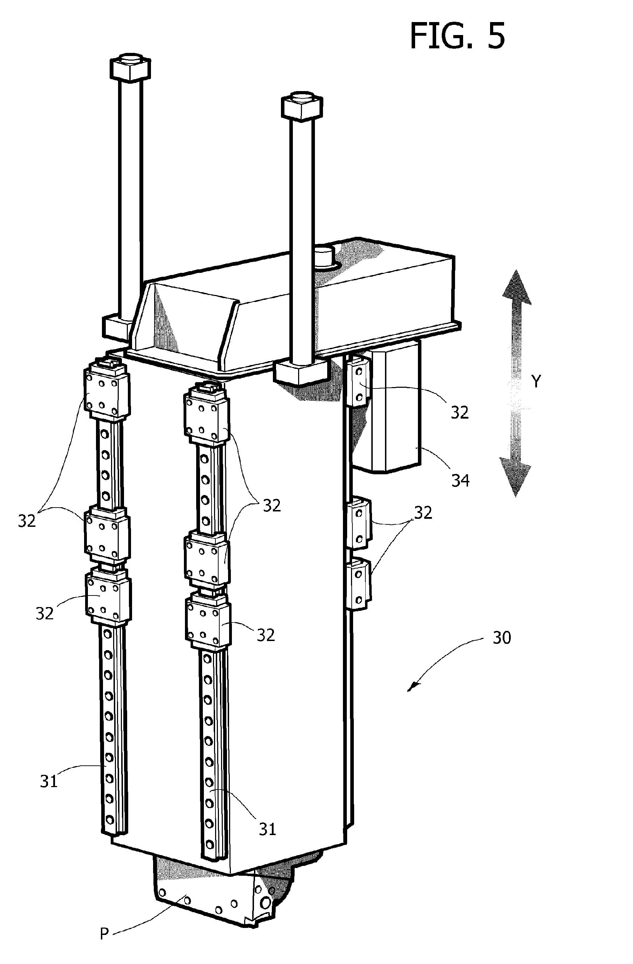

Once again with reference in particular to Figure 5, the movement of translation of the slide 8 is controlled by a screw 15, which engages an internal screw (not visible in the drawings) associated to the slide 8. The screw 15 is controlled via a belt transmission 16 by an electric-motor assembly 17.

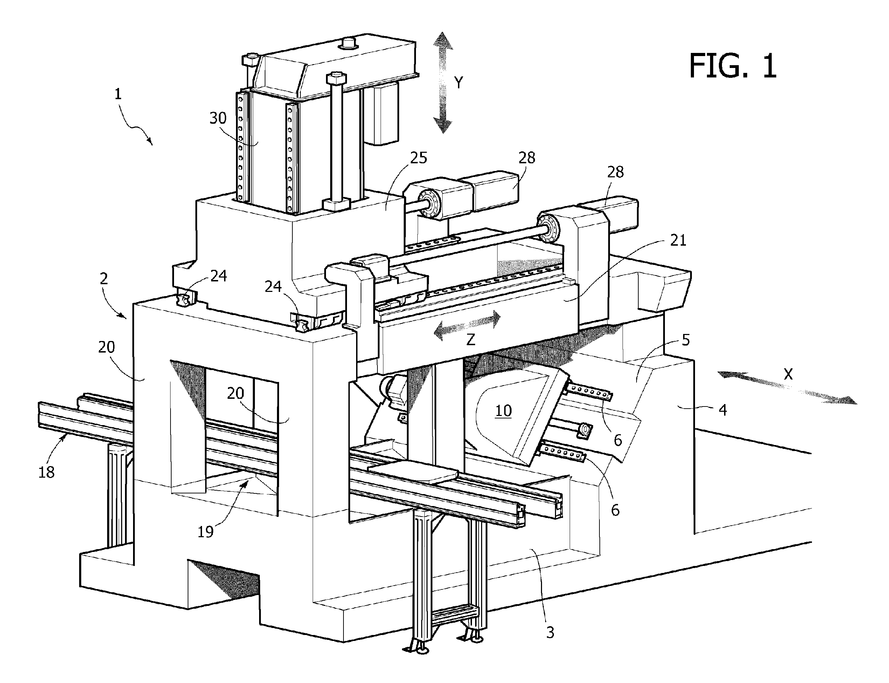

To return to Figures 1, 2 and 7 of the annexed plate of drawings, the base 3 has one end opposite to the shoulder 4 located in the direction of a line 18 for conveying the workpieces, having the function of feeding in succession a series of workpieces to be machined to the machining centre 1 and for conveying the workpieces machined by the machining centre towards an unloading end of the line. The line 18 can be made according to any known technique. It may, for example, be constituted by a pallet conveyer, for example a chain conveyer, with possibility of accumulation. The constructional details of said conveyer are not described or illustrated herein since they can be made in any known way and in so far as, taken in themselves, they do not fall within the scope of the present invention.

As may be seen, the line 18 for conveying the workpieces passes over the base 3. The portion of the line that is located above the base 3 defines a workpiece-transfer station 19, where each time a workpiece to be machined is picked up or else a machined workpiece is unloaded. It is the machining centre itself that performs said function of loading and unloading the workpieces, using the means that will be described in what follows, without the aid of any external loading and unloading device. For the purpose, the fixed structure 2 of the machine comprises a framework including vertical columns 20 that rise from the base 3, two overhead horizontal beams 21, perpendicular to the direction X of sliding of the chuck-holder structure, which connect the top end of the columns 20 to the top end of the shoulder 4 of the base, and two overhead horizontal cross members 22 that connect between them the ends of the overhead beams 21. Set on the top surfaces of the two beams 21 perpendicular to the direction X are guides 23, slidably mounted on which are runners 24 (Figure 1) carried by a slide 25 that extends in the space comprised between the two longitudinal beams 21 and that is hence mobile in the horizontal direction Z orthogonal to the direction X. The movements of the slide 25 in the direction Z are controlled by two screws 26 that engage internal screws 27 carried by the slide 25. The screws 26 are controlled by electric-motor assemblies 28 carried by supports 29 projecting vertically from the horizontal beams 21. Slidably mounted through the body of the slide 25 is a further slide 30 mobile in a vertical direction Y. The body of the slide 30 is of a prismatic shape and has on two opposite faces pairs of guides 31 that are slidably engaged on runners 32. The runners 32 are fixed to the walls of the cavity of the slide 25 through which the slide 30 is mounted. The movement of the slide 30 in the direction Y is controlled by a screw 33, which is driven in rotation by a motor 34 mobile with the slide 30 and which engages an internal screw associated to the slide 25. The motor 34 is suspended from a beam 36 projecting in cantilever fashion from the top of the slide 30 and is connected to the screw 33 by means of a transmission (not illustrated).

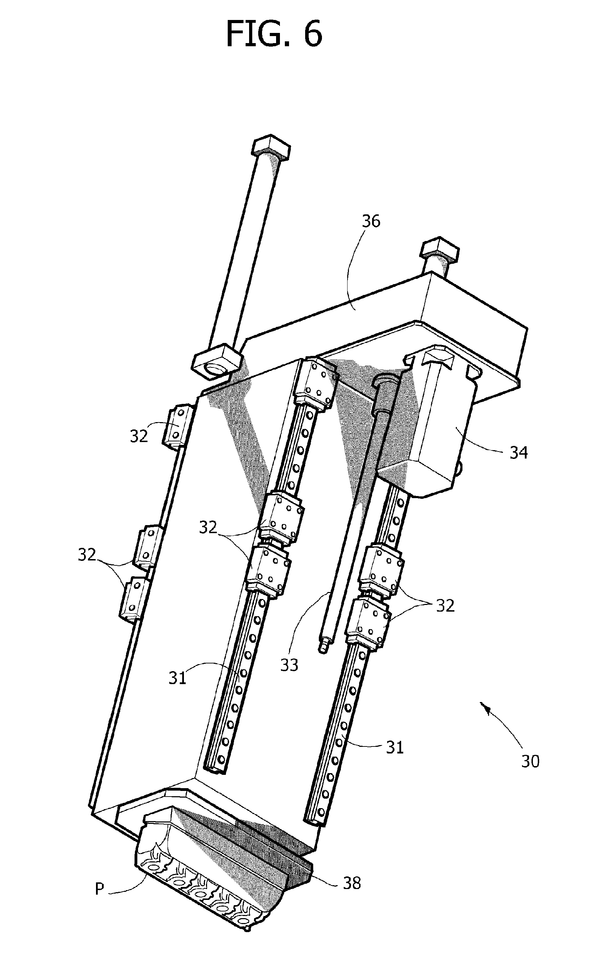

The slide 30 performs the function of chuck structure in so far as at its bottom end it is provided with means of any known type (not illustrated) for holding a workpiece from above. Figure 6 illustrates the example of a cylinder head of an internal-combustion engine that is held in a position set upside down by the chuck structure 30. The means for holding the workpiece may, for example, be constituted by gripper means that are able to co-operate with the workpiece itself or with a supporting base to which the workpiece is temporarily fixed. The example illustrated in Figure 6 regards in particular the case of use of a plate 38 to which the workpiece P is screwed.

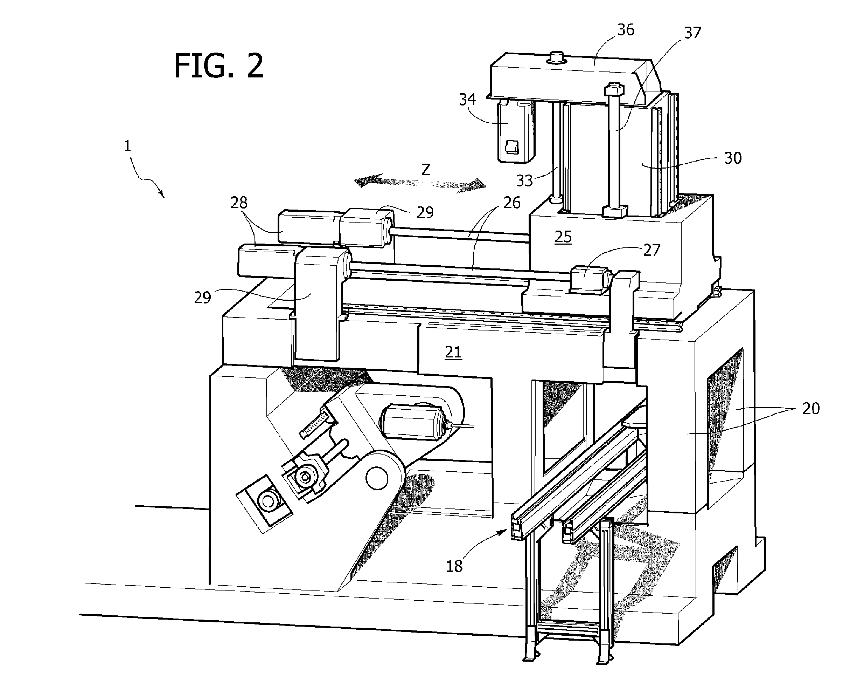

Operation of the machining centre described above is outlined in what follows. The workpieces to be machined are fed in succession from the line 18 to the transfer station 19 in a position already set upside down. In the case, for example, of cylinder heads, each head is screwed to a faceplate 38 that faces upwards in the condition of conveyance along the line 18. Once it has reached the transfer station 19, the workpiece is picked up by the chuck structure itself, in so far as the slide 25 is able to move from the working position (at the right-hand end in Figure 1) to the workpiece-transfer position, as may be seen in Figures 1 and 2. In this position of the slide 25, the chuck structure 30 is set above the transfer station 19. Consequently, the chuck structure 30 is able to approach the workpiece and to pick it up, exploiting the movement of the slide 30 in the direction Y. Once the workpiece has been picked up, the slide 30 rises, and the slide 25 slides into the working position, in which the workpiece can be engaged by the tool 14. Machining is performed exploiting the position of relative movement between the workpiece and the tool that can be obtained thanks to the possibility of movement of the chuck structure in the two directions Y and Z, the possibility of movement of the chuck-holder structure in the direction X, and the possibility of oscillation of the chuck about an axis parallel to the direction X.

As has been seen, the machining centre according to the invention is hence able to operate without any need to envisage a device for loading and unloading the workpieces. In addition, since the workpiece is held in a position set upside down, from above, by the chuck structure, the same workpiece is readily accessible on all of its five exposed sides.

In addition, holding of the workpiece from above enables the machining swarf to drop and to be emptied out more easily, which renders the machining centre according to the invention particularly suited also for dry-cutting operations.

Of course, without prejudice to the principle of the invention, the details of construction and the embodiments may vary widely with respect to what is described and illustrated herein purely by way of example, without thereby departing from the scope of the present invention.

## Claims

1. A machining centre, comprising:
- a fixed supporting structure (2);
- a chuck structure (30) carried by the fixed structure (2);
- a chuck-holder structure (9) carried by the fixed structure (2); and
- a chuck assembly (13), which is mounted so that it can turn within the chuck-holder structure (9) and is provided with means for fitting a tool to the chuck,
said machining centre being **characterized in that** the chuck structure (30) is pre-arranged for holding the workpiece (P) from above and is supported by the fixed structure (2) in such a way as to be able to translate both in a vertical direction Y, for picking up a workpiece (P) to be machined from a transfer station (19) or for unloading a machined workpiece onto said station, and in a horizontal direction Z so as to be displaceable between a working position, in which the workpiece (P) can be engaged by the tool, and a workpiece-transfer position, set at a distance from the working position, in which the chuck structure (30) is able to unload a machined workpiece onto the transfer station or to pick up a workpiece to be machined from said station.

2. The machining centre according to Claim 1, **characterized in that** the chuck structure (30) is carried by a first slide (30) mounted so that it can slide in the aforesaid vertical direction Y on a second slide (25), which is mounted so that it can slide on the fixed structure (2) in the aforesaid horizontal direction Z.

3. The machining centre according to Claim 1, **characterized in that** the chuck-holder structure (9) is carried by a slide (8) mounted so that it can slide on the fixed structure (2) in a horizontal direction X orthogonal to the two aforesaid directions Y, Z.

4. The machining centre according to Claim 3, **characterized in that** a chuck-holder member (12) is mounted so that it can turn on the slide (8) of the chuck-holder structure (9) about an axis parallel to said third direction X and is set with the chuck axis set in a direction orthogonal to said third direction X.

5. The machining centre according to Claim 4, **characterized in that** the slide (8) of the chuck-holder structure (9) is mounted so that it can slide on guides (6) provided on an inclined plane (5) of a shoulder (4) that rises from a fixed base (3) of the machine.

6. The machining centre according to Claim 2, **characterized in that** the aforesaid second slide (25) is mounted so that it can slide on an overhead part (21) of the fixed structure (2).

7. The machining centre according to Claim 2, **characterized in that** the first slide (30) is mounted so that it can slide in the aforesaid vertical direction Y through the body of the second slide (25).

8. The machining centre according to Claim 6, **characterized in that** the aforesaid overhead part of the fixed structure (2) comprises overhead horizontal beams (21) that connect, at the top, vertical columns (20) that rise from the base (3).

9. The machining centre according to Claim 8, **characterized in that** the aforesaid overhead horizontal beams (21) are connected at one end to said columns (20) and to the top end of a shoulder (4) that rises from the base in a position adjacent to the workstation.

10. The machining centre according to Claim 9,
**characterized in that** the aforesaid workpiece-transfer station is set underneath said overhead part of the fixed structure of the machine and at the intersection with a line for conveying (18) the workpieces.
